## Europäisches Patentamt
## European Patent Office
## Office européen des brevets

(19)

(11) Numéro de publication : **0 076 192 B1**

(12) **FASCICULE DE BREVET EUROPÉEN**

(45) Date de publication du fascicule du brevet :
24.04.85

(51) Int. Cl.⁴ : **F 02 K 3/12**, F 02 K 3/075, F 02 K 3/11

(21) Numéro de dépôt : 82401681.0

(22) Date de dépôt : 16.09.82

(54) **Moteur de propulsion, notamment pour avion supersonique.**

(30) Priorité : 25.09.81 FR 8118070

(43) Date de publication de la demande :
06.04.83 Bulletin 83/14

(45) Mention de la délivrance du brevet :
24.04.85 Bulletin 85/17

(84) Etats contractants désignés :
DE FR GB

(56) Documents cités :
FR-A- 943 203
FR-A- 1 288 767
FR-A- 2 041 560
FR-A- 2 183 531
FR-A- 2 392 239
GB-A- 1 211 081

(73) Titulaire : **SOCIETE NATIONALE D'ETUDE ET DE CONSTRUCTION DE MOTEURS D'AVIATION, "S.N.E.C.M.A."**
2 Boulevard Victor
F-75015 Paris (FR)

(72) Inventeur : **Loisy, Jean Maurice**
6, allée des Oeillets Moulignon
F-77310 Saint Fargeau-Ponthierry (FR)
Inventeur : **Menioux, Claude Charles Félix**
26-28, grande rue Charles de Gaulle
F-94130 Nogent Sur Marne (FR)

(74) Mandataire : **Moinat, François**
S.N.E.C.M.A. Service des Brevets Boîte Postale 81
F-91003 Evry Cedex (FR)

## Description

La présente invention concerne un moteur de propulsion, du type turbomachine perfectionnée particulièrement adaptée notamment pour avion supersonique.

Les moteurs de propulsion qui ont été développés pour les avions supersoniques dits « de première génération » ne sont pas parfaitement satisfaisants. Dans de nombreux cas, en effet, le jet propulsif n'occupe pas, tout au moins à certains régimes, la totalité de la section de la tuyère, qui est, de ce fait, surdimensionnée.

D'autre part, il existe une certaine incompatibilité entre l'obtention d'une forte poussée par unité de débit au régime de croisière supersonique, ce qui implique des vitesses d'éjection aussi élevées que possible, d'une part, et la réduction de la vitesse d'éjection au décollage, qui est souhaitable pour limiter le bruit, d'autre part. En effet, pour fournir une poussée suffisante au décollage, avec des vitesses d'éjection ainsi réduites, le propulseur exige un débit d'admission important, et, par conséquent, une section d'entrée importante. Le maître-couple croissant sensiblement proportionnellement à la section d'entrée, un accroissement de celle-ci entraîne celui du maître-couple, donc de la traînée de ladite nacelle, et, par suite, une réduction de la « poussée utile » (poussée du moteur moins traînée de la nacelle correspondante).

Pour résoudre ce problème, la Demanderesse a décrit dans FR-A-2 392 239, déposé le 30 août 1976, un système de propulsion pour avion supersonique, comportant un turboréacteur externe et un turboréacteur interne, logés concentriquement l'un à l'autre dans un même fuseau moteur, et pouvant fonctionner indépendamment l'un de l'autre, le turboréacteur externe s'étendant axialement autour d'une partie resserrée de l'enveloppe du turboréacteur interne qui est comprise entre son dernier étage de compresseur et sa chambre de combustion. Cette disposition permet de grouper deux turboréacteurs, l'un interne et l'autre externe, dans une même nacelle, de maître-couple relativement faible et juste suffisant pour contenir le turboréacteur interne puisque le turboréacteur externe est en quelque sorte « noyé » dans la partie resserrée de l'enveloppe du turboréacteur interne. Au décollage, cependant, les poussées des deux turboréacteurs s'ajoutent, si bien que leurs vitesses d'éjection peuvent être réduites pour limiter le bruit produit. Cependant, comme tous les autres moteurs de propulsion comportant deux turboréacteurs, fonctionnant en parallèle et/ou en série, ce système de propulsion antérieurement connu est d'un poids relativement élevé, dans la mesure où chacun de ses deux turboréacteurs, l'interne et l'externe, comporte au moins un ensemble de compression, une chambre de combustion et au moins un étage de turbine.

Par ailleurs, FR-A-1 288 767 décrit un groupe propulseur comportant des canaux séparés. L'un contient un générateur de gaz comprenant un compresseur, une chambre de combustion et une turbine, associé avec un compresseur qui alimente en air comprimé un turbocompresseur placé dans le second canal. Dans une forme préférée, le générateur de gaz est entouré d'un conduit externe débouchant en aval dans une chambre de combustion placée en série entre ledit générateur de gaz et la turbine d'entraînement du compresseur associé. La complexité de ces ensembles soit juxtaposés soit consécutifs à un encombrement qui pour certaines applications est inacceptable.

La présente invention vise un perfectionnement du système de propulsion pour avion supersonique décrit dans FR-A-2 392 239 précédemment cité, ce perfectionnement permettant notamment de réduire de façon importante la masse du système de propulsion.

Dans la terminologie habituelle, le terme « turboréacteur » — qui se trouve englobé dans le terme plus général « turbomachine » — s'applique à un moteur de propulsion comportant, en amont de la chambre de combustion, au moins un compresseur entraîné par au moins une turbine, laquelle reçoit sa puissance de gaz qui ont été chauffés dans une chambre de combustion et qui ont traversé, en avant de cette chambre de combustion, le compresseur sus-mentionné, lequel fait partie intégrante de la turbomachine. Afin d'éviter toute confusion de termes, on désignera dans la suite de cette description par « ensemble propulsif » un ensemble associé à une tuyère servant à l'éjection des gaz soit directement dans l'atmosphère soit dans une autre tuyère associée, cet ensemble propulsif comportant une chambre de combustion alimentant en gaz chauffés au moins une turbine et comportant ou non au moins un compresseur ou une soufflante.

Le moteur de propulsion selon la présente invention permet, comme l'invention décrite dans le document FR-A-2 392 239, cité précédemment, de grouper, dans une même nacelle d'encombrement relativement faible, deux ensembles propulsifs tels qu'ils viennent d'être définis. Le moteur de propulsion selon l'invention est caractérisé en ce qu'il comporte en outre des moyens pour dériver une fraction réglable de l'air comprimé provenant du dernier étage du compresseur de l'ensemble propulsif interne, directement vers la chambre de combustion de l'ensemble propulsif externe, les gaz de combustion traversant ensuite une turbine externe, et en ce que la soufflante entraînée par ladite turbine externe débite, en parallèle avec cette dernière, dans une extrémité d'un conduit annulaire externe dont l'autre extrémité débouche dans une tuyère externe à géométrie variable entourant et prolongeant la tuyère du système propulsif interne, laquelle présente aussi de préférence une géométrie variable.

Selon l'invention, les deux ensembles propulsifs fournissent simultanément des poussées dans certaines conditions de fonctionnement, et notamment au décollage, et cela avec des vitesses modérées d'éjection des gaz, donc un niveau de bruit relativement faible, tandis que, dans d'autres conditions de fonctionnement, et notamment en régime de croisière, l'un des ensembles propulsifs est mis hors service, l'autre ensemble propulsif restant en fonctionnement et produisant une poussée élevée grâce à une vitesse élevée d'éjection des gaz.

Le gain obtenu sur la masse du moteur de propulsion selon la présente invention résulte essentiellement de ce que son ensemble propulsif externe ne comporte pas d'étages spécifiques de compression, mais est alimenté en air comprimé directement à partir du dernier étage du compresseur de l'ensemble propulsif interne. D'autres avantages du moteur de propulsion selon la présente invention seront indiqués dans la suite.

On a décrit ci-dessous et illustré schématiquement aux dessins annexés, à titre d'exemples non limitatifs, deux formes de réalisation d'un moteur de propulsion pour avion supersonique selon la présente invention.

La figure 1 est une vue schématique d'une première forme de réalisation, en coupe par un plan axial ; les organes mobiles ont été représentés respectivement au-dessus de l'axe géométrique horizontal, dans les positions qu'ils occupent en régime de croisière supersonique, et, en dessous dudit axe horizontal, dans les positions qu'ils occupent en régime de décollage.

Les figures 2 à 4 sont des schémas de la moitié supérieure de la forme de réalisation illustrée sur la figure 1, ces schémas étant destinés à expliquer le fonctionnement de cette forme de réalisation aux différents régimes de vol de l'avion supersonique.

La figure 5 est une vue, analogue à la figure 1, d'une deuxième forme de réalisation.

Les figures 6 à 8 sont des schémas, respectivement analogues à ceux des figures 2, 3, 4 et correspondant à cette deuxième forme de réalisation.

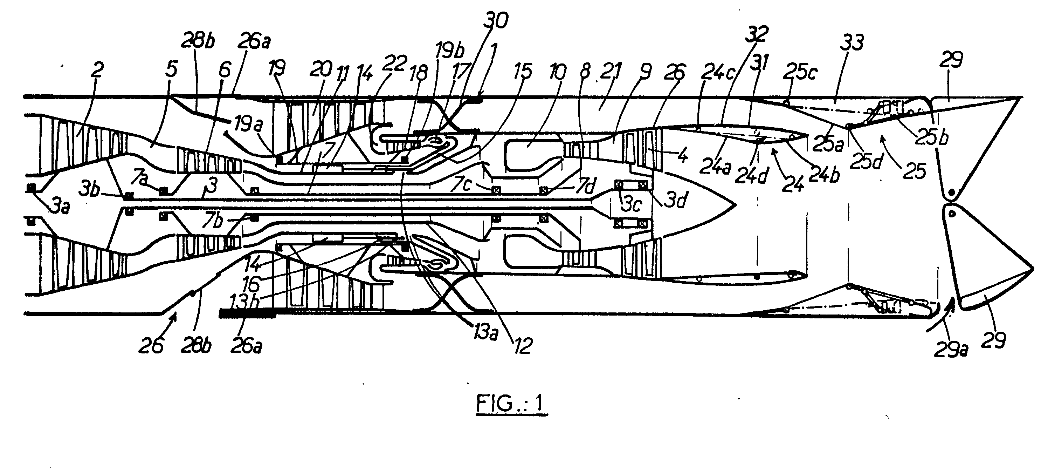

Sur la figure 1, qui représente une réalisation à double corps et simple flux, 1 désigne l'enveloppe extérieure du fuseau moteur, généralement cylindrique, qui peut, dans une variante préférée, constituer la carène de la nacelle, dans laquelle un ensemble propulsif externe et un ensemble propulsif interne sont logés concentriquement l'un à l'autre. L'ensemble propulsif interne comporte, vers l'avant de la nacelle (à gauche de la figure 1), un compresseur à basse pression 2, qui est entraîné en rotation par un arbre 3, concentrique à l'enveloppe cylindrique 1. L'arbre 3 est entraîné par une turbine à basse pression 4 et transmet la puissance fournie par celle-ci au compresseur 2. Le corps basse pression, composé du compresseur 2, de l'arbre 3, et de la turbine à basse pression 4, tourne librement dans des paliers 3a, 3b, 3c, 3d, dont les parties fixes, non représentées, sont fixées à l'enveloppe 1, ou à des éléments solidaires de celle-ci, par l'intermédiaire de pièces de support, également non représentées. La sortie du compresseur à basse pression 2 est raccordée, par un conduit annulaire fixe 5, à l'entrée d'admission d'un compresseur à haute pression 6. Le rotor de ce dernier est entraîné par un arbre creux 7, concentrique à l'arbre 3 et extérieur à celui-ci. L'arbre 7 est entraîné en rotation par une turbine à haute pression 8, et transmet la puissance fournie par celle-ci au compresseur 6. Le corps haute pression, composé du compresseur à haute pression 6, de l'arbre 7 et de la turbine à haute pression 8, tourne librement dans des paliers 7a, 7b, 7c, 7d, dont les parties fixes, non représentées, sont fixées à l'enveloppe 1, ou à des éléments solidaires de celle-ci, par l'intermédiaire de pièces de support, également non représentées. La sortie de la turbine à haute pression 8 est raccordée par un conduit fixe 9 à l'entrée d'admission de la turbine à basse pression 4, ou est directement suivie de cette dernière.

La sortie du compresseur à haute pression 6 est reliée à l'entrée d'une chambre de combustion 10, par exemple annulaire, par un conduit, également annulaire, qui est formé par l'intervalle entre deux enveloppes 11 et 12, concentriques aux arbres 3 et 7. Ces deux enveloppes, et notamment l'enveloppe 11 qui sépare l'ensemble propulsif interne précédemment décrit de l'ensemble propulsif externe, comportent, de façon connue en soi par le document FR-A-2 392 239 de la Demanderesse, déjà cité, une partie resserrée, qui est comprise entre la sortie du compresseur à haute pression 6 et l'entrée de la chambre de combustion 10.

Selon la présente invention, des passages, notamment des lumières 13a, sont aménagés dans la paroi resserrée de l'enveloppe 11 de l'ensemble propulsif interne, de préférence vers l'aval, et une virole cylindrique, 13b, est adaptée à ladite enveloppe cylindrique 11, de manière à pouvoir être déplacée librement, dans la direction axiale, par rapport aux lumières 13a. Dans la forme de réalisation considérée, au moins un vérin 14, par exemple un vérin à vis, ou un vérin hydraulique, est accouplé à l'extrémité amont de la virole 13b pour pouvoir modifier, de façon continue, sa position par rapport aux lumières 13a, entre une position d'ouverture complète (illustrée sur la moitié inférieure de la figure 1) et une position de fermeture complète (illustrée sur la moitié supérieure de la figure 1).

L'ensemble propulsif externe, qui est logé autour de la partie resserrée de l'enveloppe 11 de l'ensemble propulsif interne, comprend notamment un conduit à section annulaire, divergent vers l'aval, 15, ou bien une pluralité de conduits, par exemple cylindriques, et disposés obliquement vers l'extérieur et vers l'aval du fuseau moteur 1, qui relie un capot cylindrique 16, enveloppant de façon étanche la zone de l'enveloppe 11 où sont aménagées les lumières 13a, avec une chambre de combustion annulaire, 17, ou bien avec plusieurs chambres réparties régulièrement autour de l'enveloppe 11.

La chambre de combustion 17 alimente l'entrée d'admission d'une turbine externe 18, transmettant la puissance qu'elle prélève par l'intermédiaire d'un arbre creux 19, à une soufflante 20. L'arbre creux 19, concentrique à l'enveloppe 11 et au capot 16, tourne librement dans les paliers 19a, 19b, dont les parties fixes, non représentées, sont fixées à l'enveloppe 1, ou à des éléments solidaires de celle-ci, par l'intermédiaire de pièces de support, également non représentées. Le stator de la soufflante 20 est supporté directement par l'enveloppe extérieure 1 du fuseau moteur. La sortie de la soufflante 20 débouche dans une extrémité d'un conduit annulaire 21, qui est limité extérieurement par l'enveloppe extérieure du fuseau moteur 1, et qui s'étend vers l'aval, sensiblement jusqu'au niveau de la turbine interne 4. La sortie de la turbine externe 18 est raccordée, par exemple par un conduit coudé 22, à la même extrémité du conduit annulaire externe 21, où débouche la sortie de la soufflante 20.

Ainsi, le moteur de propulsion conforme à l'invention, qui vient d'être décrit, comporte un ensemble propulsif interne composé des éléments 2, 4, 6, 8, 10 et associé à la tuyère d'éjection correspondante, qui sera décrite ci-après, et un ensemble propulsif externe, composé des éléments 13a, 13b, 15, 17, 18, 19, 20, 22 et associé également à une tuyère d'éjection, décrite ci-après. On souligne que l'ensemble propulsif externe ne comporte pas de compresseur. Ainsi, l'une des particularités essentielles de l'invention réside en ce qu'il est prévu, en aval d'un ensemble de compression unique (dans la forme de réalisation décrite, composé d'un compresseur à basse pression 2, débitant en série dans un compresseur à haute pression 6), deux circuits produisant des effets propulsifs :

— l'un, interne, comportant une chambre de combustion 10, et au moins une turbine, 4 ou 8, et une tuyère interne qui, avec l'ensemble de compression commun, constituent l'ensemble propulsif interne,

— l'autre, externe, comportant notamment un système de prélèvement 13a, 15, d'une fraction notable de l'air sortant du compresseur commun (par exemple 25 %, voire plus) une chambre de combustion, 17, et au moins une turbine, 18, entraînant une soufflante 20, dont le flux d'air, mélangé avec celui qui sort de la turbine 18 est éjecté par une tuyère externe, qui sera décrite ultérieurement.

Selon l'une des caractéristiques avantageuses de la présente invention, la tuyère 24 de l'ensemble propulsif interne, et la tuyère 25 de l'ensemble propulsif externe sont à géométrie variable ; dans la forme de réalisation considérée, chacune des deux tuyères comporte notamment deux séries de volets 24a et 24b, d'une part, et 25a et 25b, d'autre part.

Les volets de la première série, 24a ou 25a, ont leurs extrémités amont articulées, en 24c ou 25c, respectivement sur l'extrémité aval de l'enveloppe 26, constituant la paroi interne du conduit annulaire 21, et à l'intérieur de l'enveloppe extérieure 1 du fuseau moteur, tandis que les volets de la seconde série, 24b ou 25b, ont leurs extrémités amont articulées, en 24d ou en 25d, sur les extrémités aval des volets de la première série, 24a ou 25a ; les extrémités aval 24d et 25d des volets de la première série, sont elles-mêmes raccordées par des tringleries appropriées à des moyens permettant, d'une part, la synchronisation de chaque série de volets, et, d'autre part, éventuellement le passage de chaque tuyère, de sa position convergente-divergente, représentée à la partie supérieure de la figure 1, dite position « à col fermé », dans la position dite « à col ouvert », dans laquelle les deux séries de volets d'une même tuyère peuvent être sensiblement tangents à un cône convergent vers l'aval, comme indiqué en traits pleins pour la tuyère interne, dans la partie inférieure de la même figure 1, et pour la tuyère externe, en traits mixtes sur ladite partie inférieure de la figure 1. Bien entendu les tringleries appropriées, mentionnées ci-dessus, peuvent être raccordées aux volets antérieurs 24a, 25a ou aux volets postérieurs 24b, 25b, de préférence au voisinage de leurs articulations communes. Il faut de plus noter, en particulier pour la tuyère interne 24, que, pour des questions notamment de simplification de la commande, la position dite « à col ouvert » peut ne pas être convergente de façon continue vers l'aval, tout en se rapprochant de cette configuration, et qu'il peut notamment y avoir alors une partie aval légèrement divergente. En aval de la tuyère 25, à « col variable », et en combinaison avec ses caractéristiques précédemment décrites, on peut, dans une forme de réalisation préférée, prévoir des moyens connus pour faire varier la section de sortie de ladite tuyère 25, par exemple, deux paupières 29, permettant, par un braquage partiel, d'alimenter la section de sortie en air prélevé à l'extérieur, pour diminuer la traînée de culot en régime subsonique, et, par braquage total, d'inverser les sens des deux jets, de façon à doter d'un moyen de freinage l'avion équipé du moteur de propulsion conforme à l'invention.

Des tuyères à géométrie variable (à variation du col) et à braquage de paupières sont bien connues dans la technique, ainsi que les moyens nécessaires pour leur permettre de passer d'une configuration à une autre, si bien qu'il n'est pas nécessaire de les décrire en détail.

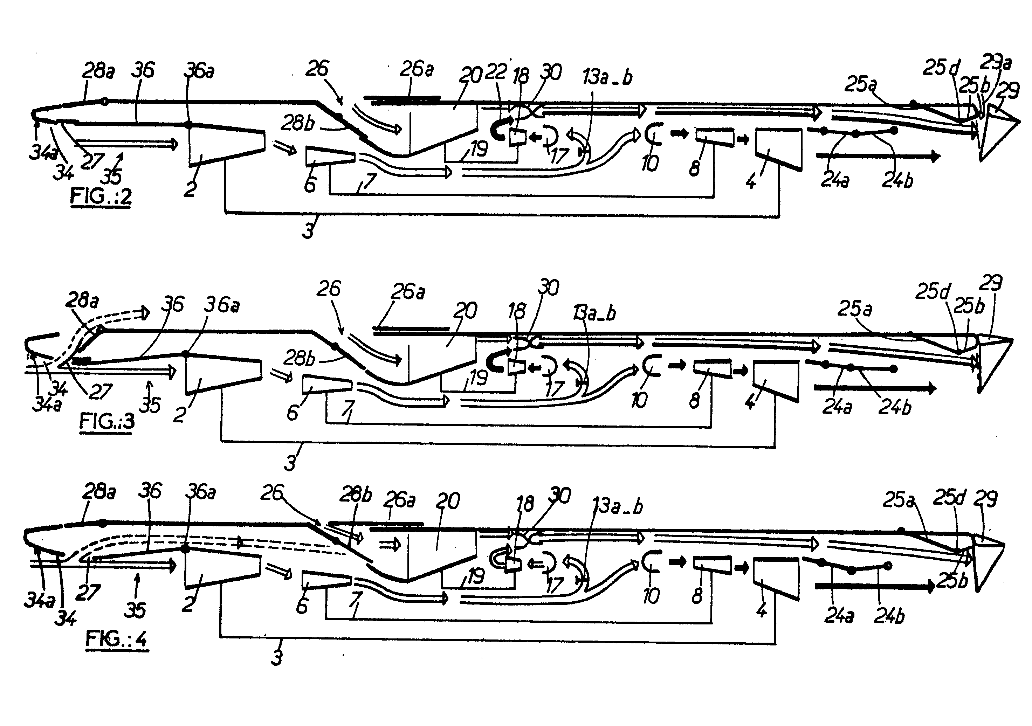

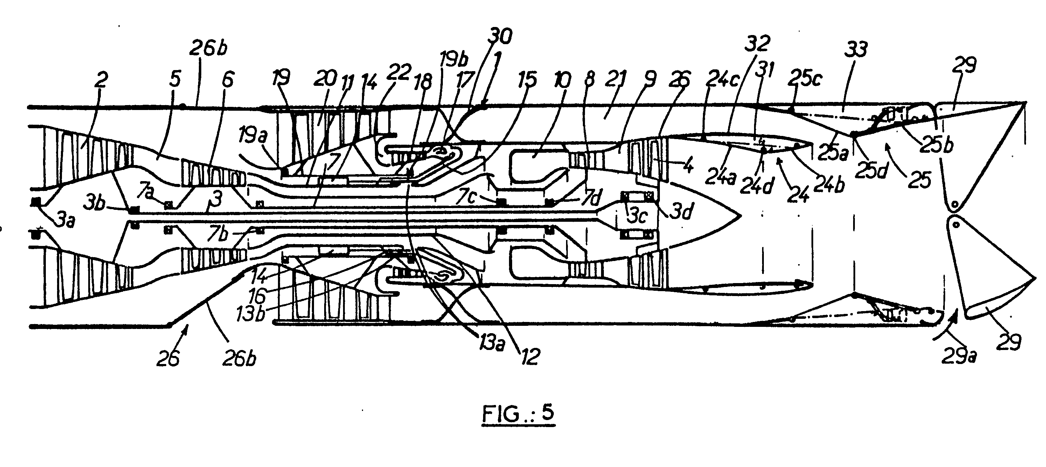

Sur les figures 2 à 4, on a seulement représenté, très schématiquement, les principaux composants, précédemment décrits, du moteur de propulsion illustré sur la figure 1 : étant donné l'échelle très réduite de ces figures 2 à 4, il a été en outre possible de représenter schématiquement des éléments complémentaires, qui, combinés avec le moteur de propulsion selon l'invention, permettent d'obtenir un « groupe propulsif » (constitué du moteur de propulsion et de sa nacelle) optimal pour un avion supersonique, et notamment pour un avion commercial supersonique. Il s'agit notamment d'entrées périphériques ou d'ouïes latérales 26, qui peuvent être obturées par une virole coulissante 26a, et qui sont destinées à alimenter en air atmosphérique la soufflante 20 lorsqu'elles sont en position complètement ouvertes, comme représenté sur la partie inférieure de la figure 1 et sur les figures 2 et 3, ou seulement entr'ouvertes comme sur la figure 4. Il s'agit en outre d'une prise d'air supersonique d'un type connu, comprenant une rampe 34 (ou plusieurs), sur laquelle la compression supersonique se produit grâce à une suite de chocs obliques, avec une efficacité élevée de compression, cette rampe étant mobile autour d'un axe 34a, ainsi que d'un piège à couche limite 27 (ou plusieurs), destiné à stabiliser un choc frontal à l'amont d'un diffuseur subsonique 35, limité lui-même par des panneaux 36, mobiles autour d'axes 36a. Il s'agit aussi de moyens tels que des volets 28a et 28b, destinés à diriger l'air aspiré par le piège à couche limite 27, soit vers l'entrée de la soufflante 20, lorsque les volets 28a sont fermés et les volets 28b ouverts (figure 4), soit vers l'extérieur de la partie avant du fuseau moteur, c'est-à-dire dans l'atmosphère, lorsque, inversement, les volets 28a sont ouverts et les volets 28b fermés (figure 3).

On va maintenant décrire à l'aide des figures 2 à 4 les différents régimes de fonctionnement du moteur de propulsion et du groupe propulsif correspondant à cette première forme de réalisation de la présente invention.

Régime de décollage, de montée subsonique et transsonique (partie inférieure de la figure 1 et figure 2) : le registre 13a-b est alors complètement ouvert, de façon à dériver une fraction maximale de l'air comprimé arrivant du compresseur à haute pression 6 et à le diriger directement vers la chambre de combustion 17 de l'ensemble propulsif externe, comme on l'a indiqué par une flèche bifurquée. La chambre de combustion 17 étant alors alimentée avec un débit préréglé de carburant, le flux de gaz chauds qui en sort actionne la turbine 18 puis se décharge, par le conduit coudé 22, dans le conduit annulaire 21 (figure 1), ladite turbine 18 entraînant en rotation la soufflante 20, qui est alimentée en air atmosphérique par les entrées périphériques ou ouïes latérales 26, que dégage complètement la virole 26a ; les rampes 34 et les panneaux 36 sont placés de façon à laisser l'entrée de la veine principale la plus ouverte possible, et les volets 28a et 28b sont par contre fermés. La tuyère interne 24a-24b est en position ouverte, alors que la tuyère externe 25a-25b, a son col « fermé ». Les volets terminaux ou paupières 29 sont assez fortement braqués en position convergente, et ils permettent de ce fait une admission d'air extérieur selon la flèche 29a. C'est dans cette condition de vol qu'ils ont le braquage maximum en jet direct. L'air sortant de la soufflante 20 se mélange avec les gaz de sortie de la turbine 18 dans le conduit annulaire 21, le mélange pouvant avantageusement être accéléré par un mélangeur 30, par exemple du type « à marguerite » (voir aussi la figure 1). Ce mélange de gaz encore chauds, qui constitue le flux externe, rejoint, par l'espace annulaire compris entre les bords aval des volets 24b de la tuyère interne, d'une part, et l'enveloppe 1 ou les volets 25a de la tuyère externe, d'autre part, le flux interne de gaz à température plus élevée, qui sort de la turbine à basse pression, 4, de l'ensemble propulsif interne. Le flux interne et le flux externe sont éjectés simultanément par la tuyère 25. Bien entendu, tout au moins pendant le décollage proprement dit, les débits de carburant qui alimentent les chambres de combustion 10 et 17 sont réglés de manière que le moteur de propulsion produise la poussée exigée par les règlements de sécurité relatifs au décollage.

Cependant, comme on l'a déjà indiqué, le débit total du mélange gazeux éjecté, qui correspond à la somme des débits respectifs du flux interne et du flux externe, peut être très important sans que la vitesse d'éjection des gaz atteigne une valeur trop élevée, qui serait génératrice d'un niveau de bruit inacceptable pendant le décollage et la phase ascensionnelle initiale. Il convient de remarquer que la dérivation d'une fraction importante du débit du compresseur de l'ensemble propulsif interne produirait, à température égale devant la turbine, une chute de régime des turbines 8 et 4 (puisqu'il y aurait moins d'énergie dans une masse de gaz réduite, par exemple de 25 %, avec la même température d'entrée dans la turbine). Il en résulterait une diminution du régime de l'ensemble de compression, donc une diminution du flux interne. Pour éviter cette chute de débit, qui se traduirait par une chute de poussée de l'ensemble propulsif interne, on peut augmenter le débit de carburant alimentant la chambre de combustion 10 de l'ensemble propulsif interne, de manière à élever la température des gaz chauds qui traversent les turbines. Cette augmentation de la température devant la turbine 8, ne fait d'ailleurs que rétablir, au décollage, la température qu'il y aura devant la turbine en régime de croisière, pour une valeur du nombre de Mach de l'ordre de 2, et, pour un fonctionnement optimum de l'ensemble de compression correspondant à une valeur constante du rapport $N/\sqrt{T_e}$, N étant la vitesse de rotation de l'ensemble de compression et $T_e$ la température de l'air qui y entre. On peut aussi, bien entendu, ajuster le débit de carburant dans la chambre de combustion 17 de l'ensemble propulsif externe, pour obtenir une poussée totale du moteur de propulsion, la plus grande possible dans les conditions du décollage, tout en maintenant le bruit à un niveau acceptable.

Comme indiqué ci-dessus, dans le cas où le moteur de propulsion suivant l'invention est destiné à un régime de croisière correspondant à un nombre de Mach de 2 environ, on peut prévoir un pourcentage de dérivation de l'ordre de 25 %. Ce pourcentage correspond approximativement au maintien de la valeur de la température devant la turbine 8 dans les conditions du décollage et en régime de croisière pour un fonctionnement correspondant à la valeur constante du rapport

$N/\sqrt{T_e}$. Bien entendu, le pourcentage de dérivation est préférablement augmenté si la valeur du nombre de Mach prévue pour le régime de croisière est plus élevée. A titre d'exemple, le rapport du pourcentage de dérivation au débit total du compresseur, pour un ensemble propulsif interne monoflux, peut être égal ou voisin du rapport : Température totale au nombre de Mach de croisière — Température INA au sol/Température au nombre de Mach de croisière.

Régime de montée et d'accélération, en bas de la gamme supersonique : pour passer du régime précédent à celui-ci, il suffit de réduire l'ouverture du registre 13a-b, par exemple en faisant déplacer, par les vérins 14, la virole 13b vers la droite de la figure 1, à partir de sa position précédente, d'ouverture complète, et de diminuer progressivement le braquage des paupières 29. Ce régime permet, par exemple, d'amener l'avion propulsé par le moteur selon la présente invention, d'une valeur du nombre de Mach, voisine de 1,2, à une valeur de ce nombre, voisine de 1,5.

Régime de montée et d'accélération dans la gamme supersonique (figure 3) : la principale différence avec le régime précédent réside en ce que les rampes 34 et les panneaux 36 sont braqués de façon à améliorer l'efficacité de la prise d'air et en ce que les volets 28a sont ouverts, les volets 28b restant fermés, si bien que l'air aspiré par le piège à couche limite, 27, est dirigé vers l'extérieur de la partie avant du fuseau moteur, c'est-à-dire renvoyé dans l'atmosphère autour de la partie avant dudit fuseau moteur. Ceci est dû au fait que, à ces nombres de Mach relativement élevés, il est nécessaire d'aspirer la couche limite du faisceau d'air entrant dans le moteur ; cependant, dans la forme de réalisation représentée à la figure 3, comme l'alimentation de la soufflante 20 nécessite le maintien des ouïes 26 en position d'ouverture complète, et, par suite, celui des volets 28b en position de fermeture complète, l'air ainsi aspiré doit nécessairement être évacué à l'extérieur du fuseau moteur, grâce à l'ouverture des volets 28a. Par ailleurs, les paupières 29 sont dans leur position d'ouverture où elles prolongent le divergent formé par les volets 25b.

Régime de fin d'accélération (figure 4) : il s'agit d'une phase transitoire correspondant à des valeurs du nombre de Mach de l'ordre de 1,7 à 1,9, dans laquelle il y a réduction progressive de l'importance du flux externe relativement à celle du flux interne ; le registre 13a-b reste entr'ouvert, mais la virole 26a est déplacée dans le sens de la fermeture de façon à produire une réduction partielle et progressive des sections d'entrée des ouïes latérales 26, d'où résulte une réduction du débit correspondant au flux externe. D'autre part, les volets 28a sont refermés, tandis que les volets 28b sont assez largement ouverts, si bien que l'air aspiré au niveau du piège à couche limite 27, au lieu d'être rejeté dans l'atmosphère au niveau des volets 28a, est dirigé vers l'entrée de la soufflante 20, en parallèle avec le flux d'air qui pénètre à travers les ouïes 26, partiellement ouvertes. D'autre part, la chambre de combustion externe, 18, cesse d'être alimentée en carburant, si bien que le conduit annulaire 21 (figure 1) n'est plus traversé que par un courant d'air à température relativement basse.

Enfin, la tuyère interne 24a-24b est amenée en position à col « fermé », dans laquelle la tuyère externe 25a-25b est elle-même maintenue, alors que les paupières 29 restent, bien entendu, en position complètement ouverte. Ces dispositions offrent l'avantage d'éviter la réduction importante de poussée qui résulterait de l'interruption brutale et complète du flux externe, sortant du canal annulaire 21.

Régime de croisière supersonique (voir la figure 1, sa partie supérieure) : c'est le régime qui est établi pour des valeurs du nombre de Mach au moins égales à 1,9 ; pour établir ce régime à partir du régime précédemment décrit, il suffit de fermer complètement les ouïes latérales 26 au moyen de la virole 26a et d'ouvrir complètement les volets 28b, tandis que les volets 28a restent fermés ; en outre, le registre 13a-b est fermé complètement, tandis que la chambre de combustion 17 continue à ne recevoir aucun débit de carburant. La turbine externe 18 cesse d'être actionnée et d'entraîner la soufflante 20. En revanche cette dernière est entraînée en autorotation, à vitesse relativement basse, par l'air aspiré au niveau du piège à couche limite 27, grâce à l'ouverture complète des volets 28b ; la soufflante, qui entraîne à vide la turbine externe 18 par l'intermédiaire de l'arbre 19, envoie donc, dans le conduit annulaire 21, un courant d'air pratiquement à la température extérieure, qui assure un certain refroidissement des parties chaudes de l'ensemble propulsif interne ; ce courant d'air froid, passant dans l'intervalle entre les tuyères externe et interne, l'une et l'autre à col « fermé », est éjecté par ladite tuyère externe en même temps que le flux interne de gaz chaud, ladite tuyère externe, 25a-25b, servant alors de « col de reprise ». Les paupières 29 restent bien entendu en position complètement ouvertes.

Régimes de croisière subsonique de survol et d'approche : ils sont utilisés aussi bien pour les phases de vol économique à des vitesses subsoniques, que pour des phases d'attente à l'atterrissage, des phases de déroutement... etc. Dans tous ces cas, le moteur de propulsion selon la présente invention est réglé de façon à réduire sa poussée aux environs de 50 à 60 % de sa poussée maximale, notamment par diminution du débit de carburant dans l'ensemble propulsif externe. Les différents organes de réglage du moteur sont alors placés dans les mêmes positions que pour le régime de décollage (figure 2), à cela près que la tuyère externe, 25a-25b, est placée dans une position partiellement ouverte, et non pas dans sa position à col « fermé ». Le registre 13a-b, notamment, est maintenu en position d'ouverture complète, si bien qu'il y a production simultanée d'un flux interne à une température voisine de celle du régime de décollage et de croisière, et d'un flux externe, à température moins élevée.

Les figures 5, 6, 7 et 8, qui représentent schématiquement une deuxième forme de réalisation de la présente invention, correspondent respectivement aux figures 1, 2, 3 et 4, précédemment décrites. Sur les figures 5 à 8, on a employé les mêmes symboles ou repères que sur les figures 1 à 4, pour représenter ou désigner les mêmes pièces, ou des pièces ayant des fonctions équivalentes. La différence majeure entre cette deuxième forme de réalisation et la première forme de réalisation, précédemment décrite de cette invention, réside dans le fait que la fermeture partielle ou totale des ouïes 26 est produite non plus par une virole coulissante, mais par des volets 26b ou d'autres moyens équivalents, tels que des panneaux ouvrants. Ceux-ci peuvent être répartis autour de la nacelle, ou au contraire être prévus seulement de chaque côté, notamment si, dans cette zone, la nacelle a une forme approximativement rectangulaire. Dans la position représentée sur la partie supérieure de la figure 5, les ouïes 26 sont complètement fermées par les volets 26b.

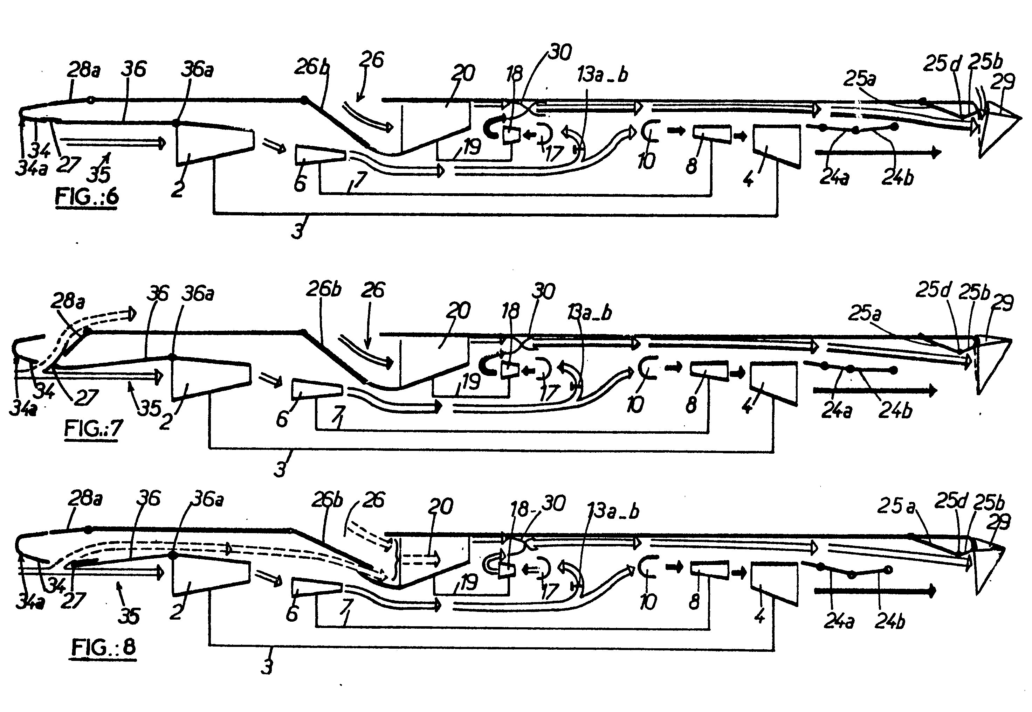

Dans la position représentée sur la partie inférieure de la figure 5, et sur les figures 6 et 7, les ouïes 26 sont au contraire complètement ouvertes.

La figure 8 correspond au régime de fin d'accélération (notamment pour des nombres de Mach de l'ordre de grandeur de 1,7 à 1,9). Comme il a été dit plus haut, dans cette phase, la soufflante doit être alimentée partiellement (donc les ouïes 26 doivent être partiellement ouvertes par les volets 26b, qui doivent donc être placés dans une position intermédiaire). Mais, par ailleurs, le piège à couche limite 27 doit être ouvert. Dans la représentation de la figure 8, ce piège à couche limite débite dans la soufflante 20, en passant par l'entrebaillement des volets 26b (ce qui est possible puisque, en fin d'accélération, les volets 26b ne sont que partiellement ouverts). Dans cette seconde forme de réalisation les volets 28b de la première forme de réalisation peuvent être supprimés. Par contre, dans une autre forme de réalisation, non représentée, les volets 28b peuvent être conservés, notamment pour donner une plus grande souplesse d'adaptation au régime de fin d'accélération, en optimisant la répartition des débits qui traversent la soufflante 20 et proviennent, pour une partie, de ces débits des ouïes latérales, partiellement ouvertes, et, pour l'autre partie, de ces débits du piège à couche limite 27. On peut notamment prévoir, pour les ouïes latérales, des volets tels que 28b, à la partie supérieure et à la partie inférieure de la nacelle, et les commander indépendamment de la position des volets 26b.

Dans une variante également non représentée, les volets latéraux (ou répartis), 26b, peuvent être remplacés par une série de volets pivotant autour d'axes perpendiculaires à l'axe du réacteur, et disposés de façon à s'étager successivement le long du fuselage, ces volets pouvant prendre des positions continûment variables, depuis la position où ils ferment complètement les ouïes 26, jusqu'à une position d'ouverture oblique, en direction de la soufflante 20. Leur conception et leur réalisation peuvent être assez analogues à celles des systèmes de protection contre le soleil, connus sous le nom de « persiennes vénitiennes ».

Bien entendu, dans ce dernier cas, les volets du type « persiennes vénitiennes » peuvent être articulés autour d'axes situés sur leurs bords d'attaque, c'est-à-dire à leurs extrémités amont. Dans ce cas, lorsque les ouïes sont ouvertes ou entr'ouvertes par de tels volets, leurs bords d'attaque ne débordent pas à l'extérieur de la surface de la nacelle ni en amont ni en aval. Dans une autre variante, les axes d'articulation de ces volets peuvent être situés en arrière de leurs bords d'attaque ; dans ce dernier cas, les bords amont des volets forment plus ou moins des écopes à l'extérieur de la nacelle, selon que leurs axes sont plus ou moins écartés de leurs bords d'attaque.

Comme l'homme de l'art le comprendra aisément, les régimes de fonctionnement de cette seconde forme de réalisation, qui correspondent aux régimes de décollage, de montée subsonique et transonique, de montée et d'accélération dans la gamme supersonique de fin d'accélération, de croisière supersonique, et au régime subsonique de croisière, peuvent être aisément déduits des régimes de fonctionnement de la première forme de réalisation, qui ont été décrits précédemment, et cela en se référant respectivement aux figures 5, 6, 7 et 8 au lieu de se référer aux figures 1, 2, 3 et 4.

La présente invention n'est pas limitée aux formes de réalisation précédemment illustrées et décrites. Elle englobe de nombreuses autres variantes. Les formes de réalisation des figures 1 et 5 elles-mêmes peuvent être utilisées dans des conditions différentes de celles indiquées précédemment pour les différents régimes de vol d'un avion supersonique.

Parmi les variantes de réalisation, on peut citer les suivantes, à titre d'exemples non limitatifs : l'ensemble propulsif interne peut être un simple corps monoflux, ou bien un simple ou double corps à double flux, ou encore un double corps à simple flux, comme représenté au dessin. La turbine à haute pression 8 de l'ensemble propulsif interne peut comporter deux étages en série l'un avec l'autre, dont les rotors respectifs sont séparés par un distributeur fixe. Une grille redresseuse, également fixe, peut être interposée entre le dernier étage de la turbine à basse pression et l'entrée de la tuyère interne. La turbine 18 de l'ensemble propulsif externe peut également comporter plusieurs étages, et être par exemple réalisée avantageusement avec des aubes superposées, de manière à obtenir notamment deux étages sur un même disque. Avec cette dernière réalisation, le conduit coudé, désigné par 22 sur la figure 1, a son entrée disposée, dans le cas d'une turbine à deux étages, en face de la sortie du premier étage, tandis que sa propre sortie, au lieu de déboucher directement dans le conduit annulaire 21, débouche à l'entrée du second étage, et c'est la sortie de ce dernier qui débouche directement dans le conduit annulaire 21. Dans le cas d'une turbine comportant un nombre d'étages supérieur à deux, le conduit coudé désigné par 22 est disposé en face de la sortie d'un étage, tandis que sa sortie est disposée à l'entrée de l'étage suivant. Dans ce cas, le conduit coudé 22 comporte des ailettes donnant au courant de gaz chauds l'inclinaison périphérique nécessaire pour l'admission dans l'étage mobile suivant de la turbine. Il s'agit en fait d'un coude-distributeur. Dans les formes de réalisation représentées aux figures 1 et 5, ne comportant pas d'aubes de turbine superposées, le coude 22 sert aussi de redresseur pour que l'écoulement des gaz soit sensiblement longitudinal à l'entrée du canal 21.

Pour la tuyère interne, 24a-24b, on peut prévoir, soit un fonctionnement entièrement automatique, sous la seule action des gaz qui la traversent, donc sans dispositif de commande, soit un système de commande par tout ou rien, comportant l'alimentation de la cavité interne 31 de ladite tuyère par des prises d'air ou de gaz à différentes pressions, soit enfin un système de commande de position (et non obligatoirement de puissance), comportant des vérins de faible encombrement, jouant principalement le rôle d'amortisseurs. En effet, dans le cas d'une tuyère convergente-divergente, à géométrie variable, fonctionnant en régime supercritique amorcé, dans lequel la vitesse d'écoulement augmente de façon continue, dans son convergent, jusqu'à la vitesse du son, puis continue à augmenter, au-delà de cette vitesse, dans son divergent, la pression qui s'exerce sur les faces des volets du divergent tournées vers l'axe du moteur de propulsion, est en tout point inférieure à la pression qui s'exerce dans la poche 31 comprise entre les volets, 24a et 24b, et leur carénage extérieur 32, pourvu que cette poche soit alimentée par une prise de pression interne judicieusement disposée en amont des volets du divergent, par exemple au col 24d, tandis que la pression qui s'exerce sur les faces des volets du convergent tournées vers l'axe du moteur de propulsion est en tout point supérieure à la pression qui s'exerce dans la poche 31. Les volets du divergent sont donc soumis à des efforts dirigés vers l'intérieur, et les volets du convergent, à des efforts dirigés vers l'extérieur. Les efforts qui s'exercent sur les volets du divergent 24b l'emportent donc pourvu que lesdits volets 24b aient une longueur suffisante par rapport aux volets 24a du convergent, assurant ainsi, pour les régimes de croisière, et correspondant au haut de la gamme supersonique, une position « col fermé » comme il a été dit précédemment.

Dans les cas où la tuyère fonctionne en régime subcritique, pour lequel la vitesse de l'écoulement augmente dans le convergent en restant inférieure à la vitesse du son, puis diminue dans le divergent, la pression qui s'exerce sur les faces internes des volets, tant du divergent que du convergent, est supérieure à la pression qui s'exerce dans la poche 31. Les volets sont donc soumis à des efforts dirigés vers l'extérieur, qui assure la position « col ouvert » en régime de décollage, de montée avec accélération, et de croisière subsonique.

Les positions « col ouvert » et « col fermé » peuvent, dans une réalisation préférée, être définies par des butées.

Pour des longueurs plus faibles des volets 24b, on peut prévoir un fonctionnement avec commande semi-automatique (sans vérins). La fermeture de la prise de pression qui fait communiquer la poche 31 avec la veine, et l'alimentation de la même poche 31 par la mise en communication, automatique ou commandée, avec une enceinte à plus basse pression, par exemple par une canalisation, non représentée, traversant le canal 21, et aboutissant à l'extérieur de la nacelle, donnent au contraire lieu, sur l'ensemble des volets 24a et 24b, à des efforts dirigés vers l'extérieur qui permettent d'obtenir une position à « col ouvert » pour les régimes de décollage, de montée subsonique, de bas de la gamme supersonique, et de croisière subsonique (pour l'attente et le déroutement notamment), comme il a été dit précédemment.

Dans certains cas, il est donc possible de supprimer les vérins de commande et, dans d'autres cas, d'utiliser des vérins de commande de faible puissance seulement, qui servent principalement d'amortisseurs. Ceci est particulièrement avantageux dans la mesure où cela permet de réduire l'importance des obstacles placés dans la veine en écoulement. Il convient enfin de noter que le pilotage de la position du col 24d, pour obtenir la position désirée, peut être particulièrement simple, du fait qu'on peut généralement se contenter d'un système par tout ou rien, sans position intermédiaire, ni variation continue.

Quant à la tuyère externe, elle peut être avantageusement commandée en pilotant d'une façon continue la pression à l'intérieur de la « poche », 33, formée entre le convergent 25a, le divergent 25b et le carénage externe 1 ; on peut utiliser pour cela, de façon connue en soi, deux systèmes de sangles, permettant de piloter les fuites d'air en amont et en aval, de telle sorte que la section réduite de la tuyère s'ajuste automatiquement à la valeur désirée.

Une autre réalisation, non décrite, mais entrant dans le cadre de l'invention, comporterait une alimentation mixte pour la soufflante 20, lorsque l'ensemble propulsif externe est en fonctionnement, une partie de l'air qui la traverse venant de la manche d'entrée principale, notamment par le piège à couche limite 27, par exemple grâce à un braquage différentiel des rampes 34 et des panneaux 36. Bien entendu, dans le fonctionnement en croisière supersonique les ouïes latérales 26 doivent rester fermées comme dans les exemples précédents, la soufflante n'étant alimentée en autorotation que par le piège à couche limite de la manche. Dans cette forme de réalisation, les volets 28a et 28b peuvent être supprimés.

**Revendications**

1. Moteur de propulsion, notamment pour avion supersonique, comportant un ensemble propulsif externe et un ensemble propulsif interne, logés concentriquement l'un à l'autre dans un même fuseau moteur, l'ensemble propulsif externe s'étendant axialement autour d'une partie resserrée de l'enveloppe de l'ensemble propulsif interne, qui est comprise entre le dernier étage de son compresseur et sa chambre de combustion, moteur caractérisé en ce qu'il comporte en outre des moyens (13a-13b-14-15-16) pour dériver une fraction réglable de l'air comprimé provenant du dernier étage du compresseur (6) de l'ensemble propulsif interne, directement vers la chambre de combustion (17) de l'ensemble propulsif externe, dont les gaz de combustion traversent ensuite une turbine externe (18), et en ce qu'une soufflante (20), entraînée par ladite turbine externe (18), débite, en parallèle avec cette dernière, dans une extrémité d'un conduit annulaire externe (21), dont l'autre extrémité débouche dans une tuyère externe (25) à géométrie variable, entourant et prolongeant la tuyère (24) de l'ensemble propulsif interne, qui présente aussi de préférence une géométrie variable.

2. Moteur de propulsion, selon la revendication 1, caractérisé par le fait que l'enveloppe extérieure (1) du moteur de propulsion est constituée partiellement par la carène aval de la soufflante (20).

3. Moteur de propulsion selon la revendication 1, caractérisé en ce que les moyens de dérivation d'une fraction réglable de l'air comprimé, comprennent au moins un passage (13a), aménagé dans la partie resserrée de l'enveloppe (11) de l'ensemble propulsif interne, au moins un registre (13b), de préférence une virole cylindrique, mobile axialement, ainsi que des moyens, tels qu'au moins un vérin (14), permettant de modifier de façon continue la position relative du registre (13b) et du passage (13a), entre une position d'ouverture complète et une position de fermeture complète.

4. Moteur de propulsion selon l'une quelconque des revendications 1 à 3, caractérisé en ce que les moyens de dérivation ont des sections permettant d'obtenir un taux maximum de dérivation d'environ 25 % du débit d'air comprimé sortant du dernier étage du compresseur, dans le cas d'un moteur adapté à un régime de croisière de l'avion correspondant à un nombre de Mach de l'ordre de 2, et un taux maximum de dérivation supérieur à 25 % dans le cas d'un moteur adapté à un régime de croisière de l'avion correspondant à un nombre de Mach supérieur à 2.

5. Moteur de propulsion selon l'une quelconque des revendications 1 à 4, caractérisé en ce que le dernier étage, ou un étage précédent, de la turbine externe (18) de l'ensemble propulsif externe comporte un conduit coudé (22) qui, soit dévie l'écoulement des gaz sortant du dernier étage vers l'entrée du conduit annulaire externe (21), soit confère, au moyen d'ailettes dont il est pourvu, au courant de gaz sortant d'un étage précédent, l'inclinaison périphérique nécessaire pour l'admission de ce courant de gaz dans l'étage immédiatement suivant.

6. Moteur de propulsion selon l'une quelconque des revendications 1 à 5, caractérisé en ce que des entrées périphériques ou des ouïes latérales (26), contrôlées par une virole coulissant axialement (26a), sont prévues pour alimenter en air atmosphérique la soufflante (20), entraînée par la turbine externe (18), par exemple aux régimes de décollage, de montée subsonique et transsonique, de croisière subsonique, de montée avec accélération transsonique et supersonique, et d'accélération supersonique.

7. Moteur de propulsion selon l'une quelconque des revendications 1 à 5, caractérisé en ce qu'au moins une ouïe latérale (26) contrôlée par au moins un volet pivotant (26b), est prévue pour alimenter en air atmosphérique la soufflante (20) entraînée par la turbine externe (18), par exemple aux régimes de décollage, de montée subsonique et transsonique, de croisière subsonique, de montée avec accélération transsonique et supersonique, et d'accélération supersonique.

8. Moteur de propulsion selon l'une quelconque des revendications 1 à 7, caractérisé en ce que des moyens tels que des volets (28a, 28b) sont prévus pour diriger l'air aspiré, à l'intérieur de la partie avant du fuseau moteur (1), par des pièges à couche limite (27), soit vers l'entrée de la soufflante (20), entraînée par la turbine externe (18), notamment aux régimes de fin d'accélération et de croisière supersonique, soit vers l'extérieur de la partie avant du fuseau moteur (1), notamment en régime de montée avec accélération supersonique.

9. Groupe propulsif pour avion supersonique comprenant un moteur de propulsion selon l'une quelconque des revendications 1 à 8 et sa nacelle, caractérisé en ce qu'un mélangeur (30) est monté dans le conduit (21) pour accélérer le mélange entre l'air comprimé provenant de la soufflante (20) et les gaz chauds sortant de la turbine externe (18).

10. Groupe propulsif pour avion supersonique, comprenant un moteur de propulsion selon l'une quelconque des revendications 1 à 8 et sa nacelle, caractérisé en ce que la tuyère interne (24) peut prendre deux positions, l'une à col « ouvert » et l'autre à col « fermé » et, que la position à col « ouvert » ou celle à col « fermé », est commandée, soit automatiquement, soit semi-automatiquement, par mise en communication de la poche intérieure (31) de ladite tuyère (24) avec une source de pression soit relativement basse, telle que l'atmosphère entourant la nacelle, soit relativement haute, telle que celle qui existe dans ladite tuyère (24) au niveau de son col (24d).

11. Groupe propulsif pour avion supersonique comprenant un moteur de propulsion selon l'une quelconque des revendications 1 à 8 et sa nacelle, caractérisé en ce que la tuyère externe (25) peut passer d'une façon continue d'une position à col (25d) « fermé », à une position à col « ouvert », les volets amont (25a) et aval (25b) de ladite tuyère externe (25) étant, dans ladite position à col « ouvert », sensiblement alignés, et présentant une légère convergence vers l'aval, leur position étant réglée par la pression interne dans l'enceinte (33) comprise entre lesdits volets (25a, 25b) et l'enveloppe extérieure, laquelle pression interne est pilotée par réglage des sections de prise d'air ou de fuites à l'amont et à l'aval de ladite tuyère externe (25).

12. Groupe propulsif pour avion supersonique, comprenant un moteur de propulsion et sa nacelle selon l'une quelconque des revendications 9 à 11, caractérisé en ce que les tuyères interne (24) et externe (25) sont équipées de vérins de faible puissance, qui servent principalement d'amortisseurs, et qui permettent de maintenir lesdites tuyères dans la position désirée, sans battement.

13. Groupe propulsif pour avion supersonique, comprenant un moteur de propulsion et sa nacelle selon l'une quelconque des revendications 9 à 12, caractérisé en ce qu'il comporte en outre une tuyère (29) servant au réglage de la section de sortie du moteur de propulsion, ce réglage de section étant associé à une admission d'air ambiant juste en aval de la tuyère externe (25), et ladite tuyère (29) de réglage se fermant dans certaines conditions de fonctionnement, jusqu'à obturation complète, pour mettre ledit moteur de propulsion en configuration d'inversion de la poussée.

## Claims

1. Propulsion engine especially for a supersonic aircraft, incorporating an external propulsion unit and an internal propulsion unit, housed concentrically one with respect to the other in the same engine housing the external propulsion unit extending axially around a re-entrant part of the casing of the internal propulsion unit, which is situated between the last stage of its compressor and its combustion chamber, the engine being characterized in that it also incorporates means (13a-13b-14-15-16) for diverting a controllable portion of compressed air bled from the last stage of the compressor (6) of the internal propulsion unit, directly towards the combustion chamber (17) of the external propulsion unit, combustion gases from which then traverse an external turbine (18), and in which a fan (20) driven by the said external turbine (18) delivers in parallel with the latter, into one end of an annular external jet-pipe (25) of variable geometry, surrounding and prolonging the jet-pipe (24) of the internal propulsion unit, which also has preferably a variable geometry.

2. Propulsion engine, in accordance with claim 1, characterized by the fact that the external casing (1) of the propulsion engine is constituted partly by the downstream housing of the fan (20).

3. Propulsion engine in accordance with claim 1, characterized in that the means for supplying a controllable proportion of compressed air, comprises at least one passager (13a) provided in the re-entrant part of the casing (11) of the internal propulsion unit, at least one valve (13b), preferably an axially movable annular member, as well as means, such as at least one actuator (14), permitting the continuous modification of the relative position of the valve (13b) and of the passage (13a) between a completely open position and a completely closed position.

4. Propulsion engine in accordance with any one of claims 1 to 3 characterized in that the bleed means has sections permitting the obtaining of a maximum rate of bleed of about 25 % of the supply of compressed air derived from the last stage of the compressor, in the case of an engine adapted to an aircraft cruising system to a Mach number of the order of 2, and a maximum rate of bleed in excess of 25 % in the case of a motor adapted to an aircraft cruising system corresponding to a Mach number in excess of 2.

5. Propulsion engine in accordance with any one of claims 1 to 4, characterized in that the last stage, or a preceding stage, of the external turbine (18) of the external propulsion unit includes a bent duct (22) which either diverts the flow of gases bled from the last stage towards the intake of the external ring duct (21) or, by means of the vanes with which it is provided, confers on the gas flow bled from a previous stage, the peripheral angle of inclination necessary for the admission of this gas flow into the stage immediately following.

6. Propulsion engine in accordance with any one of claims 1 to 5, characterized in that peripheral intakes or lateral ears (26) controlled by a collar sliding axially (26a) are envisaged for supplying atmospheric air to the fan (20), driven by the external turbine (18), for example to systems for take-off, subsonic and transonic climbing, subsonic cruising, climbing with transonic and supersonic acceleration, and supersonic acceleration.

7. Propulsion engine in accordance with any one of claims 1 to 5 characterized in that at least one lateral ear (26) controlled by at least one pivotal shutter (26b) is provided for supplying atmospheric air to the fan (20) driven by the external turbine (18) for example to systems for take-off, subsonic and transonic climbing, subsonic cruising, climbing with transonic and supersonic acceleration, and supersonic acceleration.

8. Propulsion engine in accordance with any one of claims 1 to 7 characterized in that means such as shutters (28a, 28b) are provided for directing the intake air, to the inside of the front part of the engine housing (1), by flaps of limited extent (27) either towards the intake of the fan (20) driven by the external turbine (18), especially at ratings at the end of acceleration and of supersonic cruising, or towards the exterior of the forward part of the engine housing (1), especially at a rating for climbing with supersonic acceleration.

9. Propulsion group for a supersonic aircraft comprising a propulsion engine in accordance with any one of claims 1 to 8, and its nacelle characterized in that a mixer (30) is mounted in the duct (21) in order to accelerate mixing between the compressed air derived from the fan (20) and the hot gases derived from the external turbine (18).

10. Propulsion group for supersonic aircraft, comprising a propulsion engine in accordance with any one of claims 1 to 8 and its nacelle characterized in that the internal jet pipe (24) can take two positions, one with the throat « open » and the other with the throat « closed » and, that the position with throat « open » or with throat « closed » is controlled, either automatically or semi-automatically, providing communication from the interior pocket (31) of the said jet-pipe (24) with a source of either relatively low pressure, such as the air surrounding the nacelle, or relatively high pressure such as that which exists in the said jet-pipe (24) in the zone of its throat (24d).

11. Propulsion group for supersonic aircraft comprising a propulsion engine in accordance with any one of claims 1 to 8 and its nacelle characterized in that the external jet pipe can pass in a continuous fashion from a position of « closed » throat (25d), to a position of « open » throat, the shutters upstream of (25a) and downstream (25b) of the said jet-pipe (25) being, in the said position of « open » throat, substantially aligned, and having a slight convergence towards the rear, their position being regulated by the internal pressure in the chamber (33) lying between the said shutters (25a, 25b) and the external casing, which internal pressure is controlled by regulating the sections for taking air or for leakages at the front and at the rear of the said external jet-pipe (25).

12. Propulsion group for supersonic aircraft, comprising a propulsion engine and its nacelle in accordance with any one of claims 9 to 11, characterized in that the internal (25) and external (26) jet-pipes are equipped with low-power actuators, serving principally as vibration dampers, and which allow the said jet-pipes to be maintained in the desired position without oscillation.

13. Propulsion group for supersonic aircraft comprising a propulsion engine and its nacelle in accordance with any one of claims 9 to 12 characterized in that it comprises additionally a jet-pipe serving to regulate the outlet section of the propulsion engine, this regulation of the section being associated with an admission of ambient air just downstream the external jet-pipe (25) and the said regulating jet-pipe (29) closing under certain conditions of operation as far as complete closure, in order to bring the said propulsion engine in position for reverse thrust.

**Patentansprüche**

1. Strahlmotor, insbesondere für Überschallflugzeug, mit einer äußeren und einer inneren Triebwerksgruppe, die konzentrisch zueinander in ein und derselben Triebwerksgondel angeordnet sind, wobei die äußere Triebwerksgruppe sich axial um einen verengten Teil der Hülle der inneren Triebwerksgruppe erstreckt, der zwischen der letzten Stufe ihres Verdichters und ihrer Brennkammer liegt, dadurch gekennzeichnet, daß er ferner eine Einrichtung (13a, 13b, 14, 15, 16) aufweist, die einen regulierbaren Anteil der von der letzten Stufe des Verdichters (6) der inneren Triebwerksgruppe herrührenden Druckluft unmittelbar in Richtung auf die Brennkammer (17) des äußeren Triebwerks ablenkt, dessen Verbrennungsgase anschließend eine äußere Turbine (18) durchsetzen, und daß ein von der äußeren Turbine (18) angetriebenes Gebläse (20) parallel zu der Turbine in ein Ende einer äußeren Ringleitung (21) fördert, deren anderes Ende in eine in ihrer Gestalt veränderbare äußere Düse (25) ausmündet, die die in ihrer Gestalt vorzugsweise ebenfalls veränderbare Düse (24) des inneren Triebwerks umgibt und fortsetzt.

2. Strahlmotor nach Anspruch 1, dadurch gekennzeichnet, daß die äußere Hülle (1) des Strahlmotors teilweise durch den stromab gelegenen Tragkörper des Gebläses (20) gebildet ist.

3. Strahlmotor nach Anspruch 1, dadurch gekennzeichnet, daß die Einrichtung zum Ablenken eines regulierbaren Anteils der Druckluft mindestens einen Durchlaß (13a), der in dem verengten Teil der Hülle (11) der inneren Triebwerksgruppe angeordnet ist, mindestens einen Schieber (13b), vorzugsweise einen axial beweglichen Zylinderring, sowie Mittel aufweist, z. B. mindestens einen Arbeitszylinder (14), die die gegenseitige Stellung von Schieber (13b) und Durchlaß (13a) zwischen einer vollständig geöffneten und einer vollständig geschlossenen Stellung kontinuierlich zu verändern vermögen.

4. Strahlmotor nach einem der Ansprüche 1 bis 3, dadurch gekennzeichnet, daß die Einrichtung zum Ablenken Abschnitte aufweist, die eine maximale Ablenkung von ungefähr 25 % der aus der letzten Verdichterstufe austretenden Druckluftfördermenge bei einem Motor ermöglichen, der einem Flugbetrieb des Flugzeugs bei einer Machzahl von etwa 2 angepaßt ist, und eine maximale Ablenkung von mehr als 25 % bei einem Motor, der einem Flugbetrieb des Flugzeugs bei einer Machzahl größer als 2 angepaßt ist.

5. Strahlmotor nach einem der Ansprüche 1 bis 4, dadurch gekennzeichnet, daß die letzte Stufe oder eine vorhergehende Stufe der äußeren Turbine (18) der äußeren Triebswerksgruppe eine Umlenkleitung (22) aufweist, die entweder den Strom des aus der letzten Stufe austretenden Gases in Richtung auf den Eingang der äußeren Ringleitung (21) umlenkt oder mit Hilfe von darin vorgesehenen Schaufeln dem aus einer vorhergehenden Stufe austretenden Gasstrom die Neigung zur Peripherie erteilt, die für den Eintritt dieses Gasstroms in die unmittelbar darauf folgende Stufe erforderlich ist.

6. Strahlmotor nach einem der Ansprüche 1 bis 5, dadurch gekennzeichnet, daß Einlässe am Umfang oder seitliche Lufteinlässe (26), die durch einen axial verschiebbaren Ring (26a) kontrollierbar sind, vorgesehen sind, um das von der äußeren Turbine (18) angetriebene Gebläse (20) mit Atmosphärenluft zu versorgen, beispielsweise beim Abheben, beim Unterschall- und schallnahen Steigflug, beim Unterschallflug, beim beschleunigten schallnahen und Überschall-Steigflug und bei Überschall-Beschleunigung.

7. Strahlmotor nach einem der Ansprüche 1 bis 5, dadurch gekennzeichnet, daß mindestens ein von mindestens einer Schwenkklappe (26b) kontrollierter seitlicher Lufteinlaß (26) vorgesehen ist, um das von der äußeren Turbine (18) angetriebene Gebläse (20) mit Atmosphärenluft zu versorgen, z. B. beim Abheben, beim Unterschall- und schallnahen Steigflug, beim Unterschallflug, beim beschleunigten schallnahen und Überschall-Steigflug und bei Überschallbeschleunigung.

8. Strahlmotor nach einem der Ansprüche 1 bis 7, dadurch gekennzeichnet, daß Klappen (28a, 28b) oder eine ähnliche Einrichtung vorgesehen sind, um die angesaugte Luft mit Hilfe von Grenzschichtabnehmern (Grenzschichtfallen) (27) in das Innere des vorderen Teils der Motorgondel (1) zu leiten, und zwar entweder in Richtung auf den Eingang des von der Turbine (18) angetriebenen Gebläses (20), insbesondere bei Abschluß des Beschleunigungs- und des Überschallfluges, oder nach außerhalb des vorderen Teils der Motorgondel (1), insbesondere beim Steigflug mit Überschallbeschleunigung.

9. Antriebsgruppe für Überschallflugzeug mit Strahlmotor nach einem der Ansprüche 1 bis 8 und deren Rumpf, dadurch gekennzeichnet, daß in der Leitung (21) ein Mischer (30) angeordnet ist, um das Mischen der von dem Gebläse (20) ausgehenden Druckluft mit dem aus der äußeren Turbine (18) austretenden Heißgas zu beschleunigen.

10. Antriebsgruppe für Überschallflugzeug mit Strahlmotor nach einem der Ansprüche 1 bis 8 und deren Rumpf, dadurch gekennzeichnet, daß die innere Düse (24) zwei Stellungen einnehmen kann, nämlich eine für « offenen » Düsenhals und eine für « geschlossenen » Düsenhals, und daß die Stellung bei « geschlossenem » und bei « offenem » Düsenhals entweder automatisch oder halbautomatisch gesteuert wird durch Verbinden der Innentasche (31) der Düse (24) mit einer Quelle für entweder verhältnismäßig niedrigen Druck, etwa mit der die Gondel umgebenden Atmosphäre, oder für verhältnismäßig hohen Druck, wie er etwa in der Düse (24) im Bereich des Düsenhalses (24d) herrscht.

11. Antriebsgruppe für Überschallflugzeug mit Strahlmotor nach einem der Ansprüche 1 bis 8 und deren Rumpf, dadurch gekennzeichnet, daß die Außendüse (25) kontinuierlich aus einer Stellung mit « geschlossenem » Düsenhals (25d) in eine Stellung mit « offenem » Düsenhals übergehen kann, und daß die stromauf bzw. stromab gelegenen Klappen (25a bzw. 25b) der äußeren Düse (25) in der Stellung mit « offenem » Düsenhals praktisch miteinander fluchten und eine geringe Konvergenz in Richtung stromab zeigen, wobei ihre Stellung durch den zwischen den Klappen (25a, 25b) und der äußeren Hülle gebildeten Raum (33) reguliert wird, welcher Innendruck gesteuert wird durch Einstellen der Lufttrichteranström- oder -abströmabschnitte stromauf und stromab von der äußeren Düse (25).

12. Antriebsgruppe für Überschallflugzeug mit Strahlmotor und deren Rumpf, nach einem der Ansprüche 9 bis 11, dadurch gekennzeichnet, daß die innere Düse (24) und die äußere Düse (25) mit Arbeitszylindern geringer Leistung ausgestattet sind, die hauptsächlich als Dämpfungsmittel arbeiten und die es ermöglichen, die Düsen schwingungsfrei in der gewünschten Stellung zu halten.

13. Antriebsgruppe für Überschallflugzeug mit Strahlmotor und deren Rumpf, nach einem der Ansprüche 9 bis 12, dadurch gekennzeichnet, daß außerdem eine Düse (29) vorgesehen ist, die zum Regulieren des Austrittsquerschnitts des Strahlmotors dienen, daß die Querschnittsregulierung mit einer Zuführung von Umgebungsluft unmittelbar stromab von der äußeren Düse (25) einhergeht, und daß die Regulierdüse (29) unter bestimmten Betriebsbedingungen bis zum vollständigen Verschluß geschlossen wird, um den Strahlmotor in den Zustand der Schubumkehr zu versetzen.

FIG.: 1

0076 192



0 076 192

FIG.:2  FIG.:3  FIG.:4

2

FIG.: 5

FIG.:6

FIG.:7

FIG.:8

0 076 192